# EUROPEAN PATENT SPECIFICATION

(11) **EP 1 595 598 B1**
(45) Date of publication and mention of the grant of the patent: **09.07.2014**
(21) Application number: 05008120.7
(22) Date of filing: 14.04.2005
(51) Int. Cl.: B01J 19/00, B01L 3/02, C40B 40/06, C40B 50/14, C40B 60/14, B82Y 30/00

(54) **Confinement of fluids on surfaces**
Begrenzung von Flüssigkeiten auf Oberflächen
Confinement de fluides sur des surfaces

(30) Priority: 07.05.2004 US 841390
(43) Date of publication of application: 16.11.2005
(73) Proprietor: International Business Machines Corporation, Armonk, NY 10504 (US)
(72) Inventor: Delamarche, Emmanuel, 8800 Thalwil (CH); Juncker, David, 8047 Zürich (CH); Schmid, Heinz, 8820 Wädenswil (CH)
(74) Representative: Ragot, Sébastien Pierre

(56) References cited:
- EP-A- 1 280 185
- WO-A-00/58010
- WO-A-99/56878
- WO-A-2004/050245
- WO-A-2004/050246
- US-A- 5 429 807
- ORSCHEL M ET AL: "ERKENNUNG DER SELEKTIVITAET VON OXIDATIONSREAKTIONEN AUF KATALYSATORBIBLIOTHEKEN DURCH ORTSAUFGELOESTE MASSENSPEKTROMETRIE" ANGEWANDTE CHEMIE, VCH VERLAGSGESELLSCHAFT, WEINHEIM, DE, vol. 111, no. 18, 1999, pages 2961-2965, XP000856121 ISSN: 0044-8249
- OFER FEINERMAN, ELISHA MOSES: "A picoliter "fountain-pen" using co-axial dual pipettes", JOURNAL OF NEUROSCIENCE METHODS, vol. 127, no. 1, July 2003 (2003-07), pages 75-84,

## Description

The present invention generally relates to confinement of fluids on surfaces and particularly relates to methods for applying and confining fluids to surface areas. Even more particularly the invention relates to locally processing a surface for both additive and subtractive patterning of materials while the surface is immersed in a fluid.

### TECHNICAL FIELD AND BACKGROUND OF THE INVENTION

There are many applications in which it is desirable to apply a fluid to a surface. An example of such an application is in patterning or other processing of surfaces. Patterning and processing of surfaces with fluids is becoming increasingly important in a range of fields, including chemistry, biology, biotechnology, materials science, electronics, and optics. Patterning a surface by applying a fluid to the surface typically involves confinement of the fluid to defined regions of the surface.

A surface is typically wettable by a fluid if the contact angle between a drop of the fluid and the surface is less than 90 degrees. A channel for carrying a fluid is typically wettable if the channel exerts a negative pressure on the fluid when partially filled. Such a negative pressure promotes filling of the channel by the fluid. In a channel having a homogeneous surface, a negative pressure arises if the contact angle between the fluid and the surface is less than 90 degrees. A surface is typically regarded as more wettable if the contact angle between the surface and the fluid is smaller and less wettable if the contact angle between the surface and the fluid is higher.

One conventional surface patterning technique is lithography. In lithography, a mask is usually applied to the surface to be patterned. Apertures are formed in the mask to define regions of the surface to be exposed for treatment. Those areas of the surface remaining covered by the mask are protected from treatment. The mask is typically formed from a patterned layer of resist material. The surface carrying the mask is then typically immersed in a bath of chemical agents for treating the exposed regions of the surface. Lithography is a relatively expensive process to perform, involving multiple steps, expensive instruments and laboratory facilities with controlled environments. With the possible exception of in situ synthesis of short DNA strands, lithography is generally unsuitable for handling and patterning biomolecules on surfaces. Lithography is also unsuitable for simultaneously processing surfaces with different chemicals in parallel, as described by Whitesides, Annu. Rev. Biomed. 3 (2001), 335-373. There can be incompatibility between different process steps or chemicals used in lithography and between various surface layers processed by lithography.

Another conventional surface patterning technique is drop delivery. Drop delivery systems, such as pin spotting systems, ink jet systems, and the like, typically project a relatively small volume of fluid onto a specific location on a surface. See Shena, M., "Microarray biochip technology", Eaton Publishing 2000. However, these systems have limited resolution due to spreading of dispensed drops on the surface. Additionally, the quality of patterns formed by such systems is strongly limited by drying of the delivered fluid, as described by Smith, J.T.,"Spreading Diagrams for the Optimization of Quill Pin Printed Microarray Density", Langmuir, 18 (2002), p 6289-6293. These systems are not generally useful for dissolving or extracting materials from a surface. Additionally, these systems do not facilitate a flow of fluid over a surface. Furthermore, these systems are not suited to process a surface sequentially with several fluids.

PCT WO 01/63241 A2 describes a surface patterning technique involving a device having a channel with a discharge aperture. A matching pillar is engaged with the discharge aperture to promote deposition of molecules on the top surface of the pillar. A disadvantage with this device is that it is not possible to vary patterning conditions for different pillars individually. Exposure of the surface to the fluid needs to be sufficiently long to allow reagents to reach the surface by diffusion. The method also requires a surface with pillars matching the aperture. Precise alignment of the device with the pillars before engagement is required. Spacing between the discharge aperture and the pillars needs external control. The pillars cannot be moved on the surface to draw lines.

Yet another conventional surface patterning technique involves application of a microfluidic device to the surface. An example of such a device is described in US patent 6,089,853. The device described therein can establish a flow of fluid over a surface. The flow can be created via capillary action in the device. The device can treat a surface with different fluids in parallel. However, the device must be sealed to the surface in the interests of confining the fluid to the region of the surface to be treated. Such confinement allows the formation of patterns with relatively high contrast and resolutions. These are desirable qualities where biomolecules are patterned on a surface for biological screening and diagnostic purposes. In addition, the device must be placed on the surface to be treated and sealed around the processing regions before it can be filled with treatment fluid. If the flow is created by capillary action, other problems arise. For example, service ports in the device must be filled with treatment fluid for each patterning operation. In addition, only one fluid can be delivered to each channel in the device. The fluid cannot be flushed out of the channels before separation of the device from the surface. Furthermore, the treatment fluid tends to spread away from the regions of the surface to be treated during removal of the device from the surface. Also, the device is not suitable for processing a surface sequentially with several fluids. If the flow is created by external actuation, such as pressurization, electric fields, or the like, then other problems arise. For example, an individual connection from the actuator must be made to each channel in the device. Such connections to peripheral equipment limit the density of channels that can be integrated into the device and individually addressed. Pumping, valving, and control complexity increases as the number of channels increases. External connections create dead volume between the device and external actuators because of the intervening conduits.

Another microfluidic device for localized processing of a surface is described in IBM Technical Disclosure Bulletin reference RD n446 Article 165 Page 1046. This device is similar to that described in US patent 6,09,853. The device permits several fluids to be flushed in sequence over the same surface area without requiring separation of the device from the surface. Such a device is thus useful for chemical and biological reactions involving the sequential delivery of several fluids. A disadvantage associated with this device however is that it must be sealed around the region of the surface to be treated before filling. Another disadvantage is that the fluids cannot be filled prior to application on the device to the surface. Each additional step requires supplementary filling of the relevant fluid. The lines need to be prestructured in the device via lithography and cannot be readjusted subsequently.

Another conventional device for confining fluids to a predefined pattern between a top and bottom surface without involving a seal is described in European Patent 0 075 605. This device is useful for performing optical analysis of a fluid trapped between the top and bottom surface. However, the device requires predefined topographical or chemical patterns on both the top and bottom surfaces. Also, the device, having no inlet or outlet ports, is not suitable for the transport of fluids.

Another device for guiding fluids along a predetermined path is described in WO 99/56878. This device can flow several fluids simultaneously over a surface without involving seal to confine the fluids. However, a disadvantage of this device is that separation gaps between paths have to be capillary inactive. This limits path sizes to greater than 1 mm. Otherwise, meniscus pressures produce uncontrolled spreading of fluid. Another disadvantage of this device is that fluid is not retained after separation and can instead spread over the surface. A further disadvantage of this device is that fluid delivery requires an external connection to each path. Cumbersome peripheral flow control devices are also required.

Yet another method for guiding fluid along a surface without involving a seal is described in Zhao et al., Science, Vol. 291 (2001), p. 1023-1026. Here, the surface is patterned with a wettability pattern. Specifically, two wettable paths mirroring each other are defined on otherwise non-wettable top and bottom surfaces. This produces "virtual" channels without lateral walls that can have micrometer width. A disadvantage of this method is that it requires wettability patterns on both the top and bottom surfaces. In other words, the path for the flow of fluid must be predetermined using lithography, which is expensive and lacks flexibility. Furthermore, the flow paths cannot be readjusted subsequently. Additionally, the wettability contrast between the two patterns needs to be very high, and requires both non-wettable areas on the top and bottom surfaces and highly wettable areas within the virtual channel. Furthermore, the two patterns have to match each other exactly in shape and alignment. Capillary action can be used to fill the channels, but the fluid cannot be removed or exchanged. This method is also susceptible to uncontrolled spreading of fluid because it is relatively difficult to produce sufficiently non-wettable surfaces.

In "A picoliter "fountain pen" using co-axial dual pipettes" by Ofer Feinerman and Elisha Moses, Journal of neuroscience methods, 127 (2003), 75-84, a double pipette system for local controlled drug infusion is presented. Two concentric pipettes can be manipulated separately and pressurized independently by a designated double holder. The inner pipette is loaded with a desirable solution and functions as a source while the outer one is a sink. This gives a flow of solution between the two pipettes that protrudes only a small distance into the surrounding fluid and does not diffuse away. The double pipette system has the drawback that without moving the pipette the infusion only occurs punctually and does not allow a creation of twodimensional patterns.

In WO 01/49414 a dual capillary system is described that can be used to provide a resulubilizing fluid onto a surface of a sample substrate. A second capillary element is then used to draw the material from the surface of the substrate into the analysis channel of the microfluidic device. The sampling and fluid delivery capillaries are disposed adjacent one another so that fluid is delivered from the delivery capillary and drawn up into the sampling capillary without moving the overall device or library substrate. Fluid is expelled from the fluid delivery capillary onto the substrate surface whereupon sample material is at least partially resolubilized into the expelled fluid. A portion of the fluid on the substrate is then drawn into the analysis channel. This system is designed to have as little as possible distance between the capillaries to receive the sample close to the delivery capillary. Furthermore, the dual capillary system shall not be moved over the surface during the act of delivering or sampling fluid. Also, the expulsion of the fluid occurs before the sampling. In fact for the resolubilization some delay has to be given between the expulsion and the sampling. In addition, the sampling step is designed to draw only a portion of the resolubilized material into the sampling capillary. There is no motivation to draw as much as possible if not all of the expelled fluid into the sampling capillary.

It would be desirable to provide a technique for confining a fluid on a surface in a manner that allows the technique to be used to create twodimensional patterns.

### SUMMARY OF THE INVENTION

According to the present invention, there is now provided a method for applying a liquid to a surface to create a pattern on the surface, as recited in the appended claim.

The device used for applying the fluid to the surface is also referred to as fluid pattern creator. The device comprises a first conduit for directing a flow of a first fluid towards a surface and a second conduit for directing a flow of a second fluid away from said surface. The first conduit is arranged relative to the second conduit such that in operation the second fluid comprises substantially the first fluid, and wherein the first conduit has a first aperture that is arranged at a distance from a second aperture of the second conduit. The first aperture is also referred to as discharge aperture, the second aperture is also referred to as aspirator aperture.

This device allows to hydrodynamically confine a flow of a processing fluid between the discharge aperture, the aspirator aperture, and a surface. Thereby a pattern can be created that corresponds to the flow path of the first fluid from the first conduit towards the second conduit. This is feasible even at micrometer resolution. This fluid pattern creator is used to confine and transport the first fluid over the surface that is immersed in a different fluid, and can find application in surface and/or particle treatment/patterning for microelectronics, optics, biology, biochemistry, etc.

The fluid pattern creator comprises a first fluid container for the first fluid and a second fluid container for the second fluid. This makes the fluid pattern creator independent from a remote fluid container, allowing the fluid pattern creator to be used in a more mobile manner.

The fluid pattern creator furthermore comprises a first flow controller for controlling a first flowrate or a first pressure of the first fluid, and a second flow controller for controlling a second flowrate or a second pressure of the second fluid. The flow controller can be advantageously used to control the flow of the corresponding fluid, for instance to increase the amount of fluid per time unit that gets into contact with the surface, or to reduce the amount of fluid other than the first fluid that is contained in the second fluid.

The fluid pattern creator may for instance be set up in a way that the first and second pressures are tuned to draw the first fluid towards the second aperture. This increases the precision of the pattern created.

If the fluid pattern creator comprises a filter for regenerating the first fluid from the second fluid, the resulting first fluid can be reused for patterning, reducing the amount of wasted fluid. Also in this case, the container for the first fluid can be dimensioned smaller, since it needs to store less volume of first fluid.

The conduits are arranged at an applicator head; the advantage arises that this head is positionable near the surface via head controllers, allowing more flexibility in handling devices with a surface to be patterned. In particular the fluid pattern creator could comprise a drive for moving the applicator head relative to the surface. This allows easier positioning to create a desired pattern. Even more so, it allows to move the applicator head during patterning, thereby allowing to create a larger variety of patterns.

When locating said device proximal to the surface, to bring the two apertures close to the surface and at a substantially identical distance from the surface, the flow of the first fluid towards the second aperture will be rather homogeneous, thereby allowing to predetermine more exactly the amount of first fluid coming into contact with the surface. This is most practicable for chemical interaction between the first fluid and the surface.

The fluid pattern creator can preferably comprise a distance element for determining the distance between the apertures and the surface. This distance element would be a cheap solution to ensure the distance is kept constant, allowing to create a more predictable resulting pattern.

If the fluid pattern creator is of unitary construction, it can be very robust, manufacturable from a single piece of material, hence facilitating its manufacturing process. At the same time, mechanical tolerances are not a critical issue, the resulting fluid pattern creator exhibits a higher degree of precision and alignment that is achievable. Alignment is a critical issue to create precise patterns on a surface.

In one application, the first pressure can be regulated such that the first fluid is retained in the first fluid container when the first aperture is remote from the surface. When the first aperture is proximal to the surface, pressure may be applied to initiate flow of the first fluid out of the first aperture onto the surface. When the device is withdrawn from the surface, the first pressure may be tuned to draw back excessive fluid from the surface. There may be a plurality of first fluid containers, each coupled to a first aperture, where the pressure is controlled for each first fluid, in parallel or individually.

The first or second pressure may be generated by external pumps such as syringe pumps or peristaltic pumps or other means of pressurization, by integrated pumps such as microfabricated pumps, by electro-kinetic pumping, by capillary-force based pumping, or by other pumping means. Further, there may be provided valves for controlling the flowrate of the first or second fluid. Such valves may be located within external connections, in the fluid container, in connections between fluid container and aperture, or in the aperture. Such valves may be closed or opened on demand.

Devices used in the claimed method may form or otherwise constitute a fluidic network. There may be a feedback system for measuring pressure within such a network, for example at apertures and/or fluid containers. Alternatively, there may be provided feedback based on the volume of fluid pumped. The feedback may facilitate control of flow of fluid and avoid undesired spreading of fluid on the surface. There may be a plurality of fluid containers each coupled to an aperture, where pressure is controlled in each fluid container, in parallel or individually. Further, there may be one or more valves that control the flow for each fluid container in parallel or individually.

The flow controller may apply a pressure for retaining the fluid when the aperture is remote from the surface. The flow controller may comprise a capillary network for applying pressure to the fluid. The capillary network may comprise at least one of a plurality of parallel capillary members, a mesh, a porous material, and a fibrous material. There may be a plurality of fluid containers each coupled to an aperture. The pressures may be such that the fluid is drawn towards the fluid containers in response to withdrawal of the aperture from the surface. There may be a plurality of first and second fluid containers each coupled to the aperture, where the pressure is controlled in each fluid container, in parallel or individually.

Pressure for the first fluid container may be regulated such that the first fluid is retained in the first aperture when the flow path is remote from the surface. Pressure for the second fluid container may also be regulated such that the difference between the first and second pressures is oriented to promote flow of the first fluid from the first fluid container to the second fluid container via the flow path when the flow path is located proximal to the surface with the first fluid in the device contacting the surface. The first and second pressures can further be regulated such that excessive fluid is drawn towards at least the second fluid container in response to withdrawal of the flow path from the surface. There may be a plurality of first fluid containers each coupled to the flow path. Equally, there may be a plurality of second fluid containers each coupled to the flow path.

The pressure in the first and second aperture may be generated by external pumps or the like as herein before described. There may be provided a feedback system that measures the pressure within the system, for example at the first and second aperture and/or the first and second fluid container. The feedback may be based on the volume of fluid pumped in the first and second fluid container. The feedback may facilitate the control of the flow of fluid and avoid undesired spreading of fluid on the surface. There may be a plurality of first and second fluid containers each coupled to first and second apertures, where pressure is controlled in each of the first and second apertures, in parallel or individually. Further, there may be one or more valves controlling flow for each of the first and second apertures in parallel or individually. There may be a plurality of first fluid containers each coupled to the flow path. Equally, there may be a plurality of second fluid containers each coupled to the flow path.

In an example of the present invention, the first flow controller applies a first pressure for retaining the fluid when the flow path is remote from the surface. The second flow controller applies a second pressure to the second fluid such that the difference between the first and second pressures is oriented to promote flow of the first fluid from the first fluid container to the second fluid container via the flow path in response to the flow path being located proximal to the surface and the fluid in the device contacting the surface. Many other applications of the present invention are possible.

Devices used in the present invention may be of unitary construction, possibly formed from any one of elastomer, silicon, SU-8, photoresist, thermoplastic, ceramic, and metal. Alternatively, devices as used in the present invention may be of layered construction, with each layer possibly formed from any one of glass, polymer, silicon, SU-8, photoresist, thermoplastic, metal, and ceramics.

As indicated earlier, devices as used in the present invention are particularly useful for transporting a first fluid from a fluid container, well, reservoir, or similar fluid container, to a surface, and to confine the first fluid on the surface without need for a physical seal. Thus, the or each aperture of such device may be defined by non-sealing materials such as silicon or the like. The non-contact operation of devices used in the present invention prevents contamination or other damage to the surface being treated and to the device.

Treatment techniques embodying the present invention are applicable to surfaces having wide range of different properties and wettability. The device herein before described permits addition of a flow of first fluid, thus preventing depletion of material adsorbed to the surface treated. Homogeneous patterns of, for example, biomolecules may be thereby produced. When a device as herein described is traced over the surface treated, the lines produced may be smoother than those possible with conventional techniques, such as ink jet printing. If the first fluid deposited is relatively small, there is no or negligible spreading, drying is quick, and does not lead to excessive accumulation of material on the surface, such lines may be made smaller than possible with conventional techniques.

If a flow is applied, via a device as herein before described, the concentration of deposited materials may be varied as the device is drawn of the surface treated. A range of gradients in concentration may be thus produced, depending on application. Such a device is useful for both additive and subtractive patterning of materials onto a surface. A series of such devices may be drawn over a surface in sequence. Each aperture of such devices may contain a different one of a group of reagents for collectively implementing a chain reaction on the surface.

Another advantage associated with devices as herein before described is that they can be pre-filled with processing fluids for subsequent repetitive application and removal from areas of surfaces to be processed. Surface processing can be repeated multiple times from the same device without refilling and thus delay. Yet another advantage associated with such devices is that they can be swiftly mass-produced via conventional microfabrication techniques. In typical applications, such a device can be placed at an arbitrary location on a surface and process parameters can be controlled via dimensions and contact time. Arrays of such devices are relatively easy to fabricate.

Another advantage associated with such devices is that they can be used to treat curved surfaces such as beads or cylinders, inhomogeneous surfaces, surface with variable wettability, corrugated or otherwise roughened surfaces and the like.

Devices as used in the present invention may be employed to deposit biomolecules in selected regions of a surface to make bio-arrays, thus facilitating mass fabrication of bio-chips. Devices as used in the present invention can be equally employed in subjecting selected areas of a surface to other processes, such as processes for: repairing pattern defects on a surface; etching specific areas of a surface; depositing metal on a surface; localizing an electrochemical reactions on a surface; depositing catalytic particles for electroless deposition of metals, deposition glass or latex beads or other particles on a surface; passivating specific areas of a surface; patterning proteins, DNA, cells, or other biological entities on a surface; making assays; and, staining cells.

The device may be operated facing upwardly towards a downwardly facing surface, especially where device dimensions are very small, such that forces in the fluid interface exceed inertial forces. In general, gravity has limited effect on the device so that use in reduced gravity environments is possible.

The present invention concerns a method for applying a fluid to a surface, which method comprises: locating a two aperture applicator head as herein before described proximal to the surface; supplying the first fluid to the surface via the applicator head and retracting the applicator head from the surface.

During the supply of the first fluid, the first fluid flows from the first fluid container to the second fluid container via the flow path. The flow of the first fluid from the first fluid container to the second fluid container may be varied during the supply of the first fluid to the surface. Prior to the retracting, the applicator head as herein before described may be moved relative to the surface with the first fluid in the or each aperture contacting with the surface.

The applicator head may be oriented relative to the surface such that traces of the fluid produced as the applicator head is moved relative to the surface remain separate. Similarly, the applicator head may be oriented relative to the surface such that traces of the fluid produced as the applicator head is moved relative to the surface overlap. Prior to locating, a similar fluid may be loaded into the fluid containers. Alternatively, different fluids may be loaded into the fluid containers.

The present invention further extends to a method for applying a fluid to a surface, comprising: locating an array of applicator heads as herein before described proximal to the surface; supplying the first fluid to the surface via the array; in each applicator head of the array, flowing the fluid from the first fluid container to the second fluid container via the flow path; moving the array relative to the surface with the first fluid in each aperture contacting the surface; and, retracting the array from the surface. In at least one applicator head of the array, the flow of the first fluid from the first fluid container to the second fluid container may be varied during the supply of the first fluid to the surface. The array may be oriented relative to the surface such that traces of the flows of first fluid produced as the array is moved relative to the surface remain separate. Similarly, the array may be oriented relative to the surface such that traces of the flows of first fluid produced as the array is moved relative to the surface overlap. Similar or different first fluids may be loaded into each applicator head of the array.

In one embodiment of the present invention, an applicator head as herein before described, is brought close to a surface so as to contact the surface with the fluid in an area of micrometer dimensions defined by the geometry of the aperture. The applicator head is then removed from the surface. In another embodiment of the present invention, prior to removal of the applicator head, the surface is laterally moved relative to the applicator head with the first fluid in the applicator head remaining in contact within the surface so that the first fluid is traced across the surface. In yet another embodiment of the present invention, the tracing is performed using the applicator head herein before described, with the first fluid flowing between the apertures as the applicator head is traced is over of the surface.

### DESCRIPTION OF THE DRAWINGS

Preferred embodiments of the present invention will now be described, by way of example only, with reference to the accompanying drawings, in which:
Fig. 1 is a cross-sectional side view of combined with a functional diagram of a fluid applicator with a concentrical arrangement of conduits. The use of a device as shown in Fig. 1 or described in reference to Fig. 1 is not according to the invention.
Fig. 2a is a cross-sectional view of an applicator head with a first conduit arranged at a distance from a second conduit,
Fig. 2b is a plan view of the bottom surface of the applicator head of fig. 2a,
Fig. 3 is a plan view of the bottom surface of an applicator head with more than two conduits. Note, however, that the use of the device as described below in reference to Fig. 3 is not according to the invention.
Figure 4 is a cross-sectional view combined with a downside view of an applicator head with a two apertures within an arc-shaped recession. The use of the device shown in Fig. 4 is not according to the invention.
Figure 5 is a plan view of the device shown in Figure 3 operating in a drawing mode;
Figure 6 is a plan view of a surface treated by the drawing operation shown in Figure 5;
Figure 7 is a plan view of a multi-path device operating in a drawing mode; and,
Figure 8 is a plan view of a surface treated by the drawing operation shown in Figure 7.

All the figures are for sake of clarity not shown in real dimensions, nor are the relations between the dimensions shown in a realistic scale.

### DETAILED DESCRIPTION

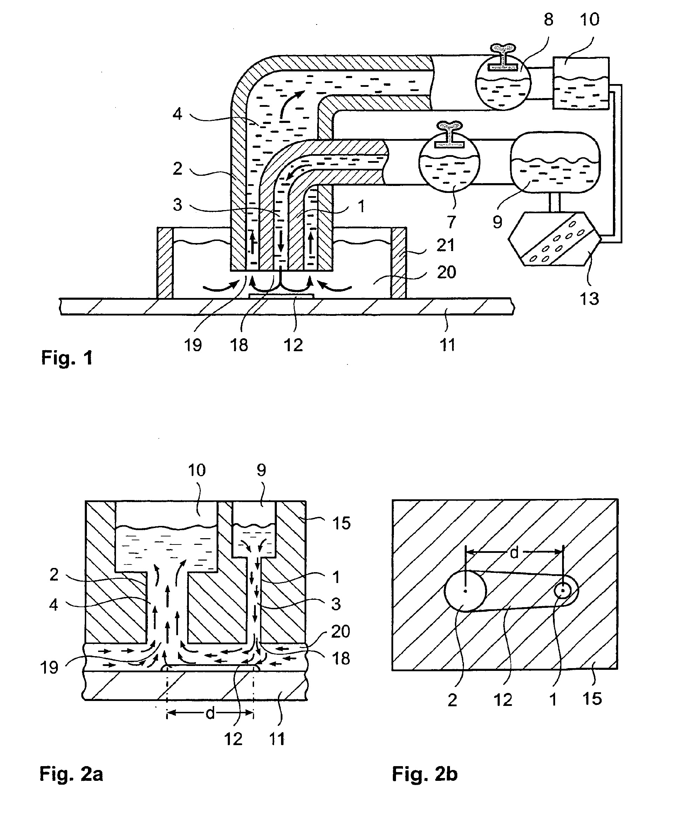

Referring first to Figure 1, a substrate having an upper surface 11, carries on that surface 11 a fence 21 that surrounds a space filled with an environmental fluid 20. A fluid applicator comprises a first fluid container 9 that is connected via a first flow controller 7 to a first conduit 1 having a first aperture 18 arranged in proximity to the surface 11. A second fluid container 10 is connected via a second flow controller 8 to a second conduit 2 having a second aperture 19 arranged in proximity to the surface 11, and surrounding said first aperture 18. The second fluid container 10 is connected via a filter 13 to the first fluid container 9. The first fluid container 9 holds a first fluid 3 that is movable through the first conduit 3 towards the first aperture 18 and from there directable towards the surface 11. The second aperture 19 provides a flow of a second fluid 4 away from the surface 11 through the second conduit 2 into the second fluid container 10.

This arrangement allows to create a fluid flow out from the first conduit 1 alongside the surface 11 into the second conduit 2. This arrangement can be used to modify the surface 11, for instance by selecting as the first fluid 3 an acid that etches the surface where the acid impinges onto the surface 11, thereby creating an etched pattern 12. The second fluid 4 will be composed of a part of the first fluid 3 and of the environmental fluid 20.

The first and second flow controller 7, 8 are functional to control the speed of flow through the corresponding conduits 1, 2. The filter 13 is usable to recover the first fluid 3 from the second fluid 4. The first flow controller 7 is arranged for controlling a first flow rate or a first pressure p3 of the first fluid 3. The second flow controller 8 is arranged for controlling a second flow rate or a second pressure p4 of said second fluid 4.

Referring next to figure 2a, an applicator head 15 is depicted, that comprises a block of solid material having two openings, one for the first fluid container 9 and one for the second fluid container 10. The first fluid container 9 is again connected to a first conduit 1 through which a first fluid 3 is deployable to a surface 11 for creating a pattern 12 thereat. The second fluid container 10 is again connected to a second conduit 2 through which a second fluid 4 is movable into the second fluid container 10 away from the surface 11. The end of the first conduit 1 proximal to the surface 11 is the first aperture 18, while the end of the second conduit 2 proximal to the surface 11 is the second aperture 19. Both apertures 18, 19 are arranged at a distance d from each other. Thereby the first fluid 3 when exiting from the first aperture 18 and when being drawn towards the second aperture 19, moves along an elongated flow path between those apertures 18, 19. The pattern that is created on the surface 11 corresponds to the form of the flow path. Hence with this applicator head 15 patterns can be created that are not point-formed like is the result of the apparatus depicted in fig. 1. The flow rate of the second fluid 4 can be controlled in a way that most or even all of the first fluid 3 is dragged into the second aperture 19, thereby reducing a blurring of the pattern through contact between the surface 11 and the first fluid 3 at locations outside the desired pattern area. The second aperture 19 can be designed larger than the first aperture 18 to enhance this effect. Fig. 2b shows a bottom view of this applicator head 15, also depicting a possible form of the pattern 12 creatable therewith. The applicator head 15 is combinable with the arrangement from fig. 1, replacing the coaxial arrangement of conduits. Hence, the applicator head 15 may be modified to comprise also a first flow controller 7 and a second flow controller 8. The applicator head 15 may also be modified not to comprise the first fluid container 9 and the second fluid container 10, but instead be connectable to those containers 9, 10, e.g., as depicted in fig. 1.

The two apertures 18, 19 of the applicator head 15 can be brought close to the surface 11 immersed in the environmental fluid 20, to be treated. The first flow controller 7 is usable to dispense the first fluid 3 through the first aperture 18 such that the first fluid 3 contacts the surface 11. Simultaneously, the second flow controller 8 aspirates the second fluid 4 at a second flow rate equal or larger than the first flow rate of the first flow controller 7. This can be achieved by setting the first pressure p3 lower in absolute value than the second pressure p4. The flow rates are preferably chosen such that the first fluid 3 dispensed from the first aperture 18 is aspirated back into the second aperture 19, without or at least reduced leakage or diffusion of the first fluid 3 into the bulk of the environmental fluid 20. It is advantageous to choose a dispense rate that results in laminar flow; such flows are typical for small dimensions. With laminar flow, there are less turbulences that could mix the dispensed first fluid 3 with the surrounding environmental fluid 20 and thus it can effectively prevent leakage of the first fluid 3. The first fluid container 9 is in operation loaded with the fluid 3 to be dispensed onto the surface 11 to be treated. The surface 11 may be a glass surface. However, the surface 11 may have other forms. The surface 11 can be flat, rough, corrugated, porous, fibrous, and/or chemically inhomogeneous.

In operation, the first aperture 18 is brought proximal to the surface 11. By tuning the first pressure in the first fluid container 9, the first fluid 3 contacts the surface 11.

In operation active flow controllers such as external pumps, integrated pumps, and valves may be provided to regulate the pressure in the fluid container 9.

The supply of the first fluid 3 can be replenished as necessary via the first fluid container 9. Such replenishing permits repetitive reuse of the device. The first fluid container 9 may be loaded and/or unloaded with the first fluid 3 from below via the first aperture 18. A lid may be provided to close the first fluid container 9. The lid may be permanently sealed so that the first fluid 3 can only be introduced via the first aperture 18. The first aperture 18 may be likewise provided with a lid to prevent evaporation during periods of nonuse. A support device having a reservoir for the first fluid 3 may be provided for filling, refilling, and draining the first fluid container 9 without involving removal of lids.

The first fluid 3 may contain treatment agents for processing a region of the surface 11. Engaging the device with the surface 11 causes exposure of the region of the surface 11 facing the first aperture 18 to the treatment agent. The treatment agent may comprise molecules. The device is therefore useful in bio-patterning applications. However, other applications are possible, such as sequential delivery of different treatments to the surface 11. Similarly, other fluid materials may be employed depending on the surface processing desired. Examples of possible fluid materials include etchants and the like for producing localized chemical reactions on the surface 11.

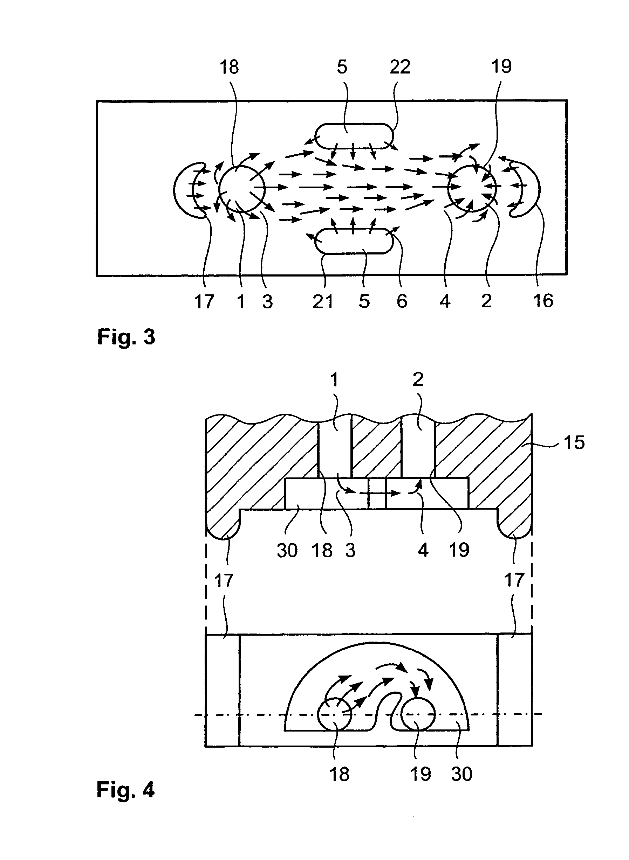

In fig. 3 an arrangement of an applicator head 15 comprising more than two apertures is depicted. In this arrangement to the side of the flow path between the first aperture 18 and the second aperture 19 two additional apertures 21, 22 belonging each to a third conduit 5 are arranged. The third conduit 5 is here arranged to eject a third fluid 6 towards the surface 11, thereby influencing the flow of the first fluid 3, as indicated by the arrows in fig. 3. The flow of the first fluid 3 is in this embodiment narrowed under the influence of the third fluid 6. So the third fluid 6 serves as a forming fluid, allowing to give the fluid flow of the first fluid 3 a different form and hence with it also the resulting pattern 12 on the surface 11.

In addition at the first aperture 18 at its side distal from the second aperture 19, another additional aperture 17 is arranged, again for ejecting the third fluid 6, using it as forming fluid to reduce the flow of the first fluid 3 that is directed away from the second aperture 19. A similar aperture 16 is arranged at the second aperture 19, at its side distal from the first aperture 18. All additional apertures 16, 17, 21, 22 that belong to the third conduit 5 hence allow to shape the fluid flow of the first fluid 3 towards the second aperture 19 to improve the obtainable pattern quality.

To further improve the pattern quality, the first and second apertures 18, 19 can each or both be arranged in a recession 30, as depicted in fig. 4. The recession 30 then serves as a semi-open channel to support the shape of the fluid flow of the first fluid 3. This becomes particularly helpful if the recession 30 has a form that is not straight, e.g. an arc. The first fluid 3 would follow a straight path if the recession 30 were absent, but the recession 30 here channels the first fluid 3 into its form allowing to create a pattern that corresponds to the recession shape, e.g., the arc. The applicator head 15 also comprises here two distance elements 17 that, in the event that the applicator head 15 is brought into contact with the surface 11, determine the minimum distance between the apertures 18, 19 and the surface 11. Hereby the geometry that is present and functional to shape the fluid flow along the flow path, is determined and fixed. This allows in particular to calculate more precisely the resulting fluid flow and hence the resulting pattern form. It also allows to use the applicator head 15 repetitively wherein the resulting pattern will be substantially identical on each use of the applicator head 15.

The applicator head 15 can be of unitary construction which makes it stabler, easier to manufacture and less prone to damage. The applicator head 15 may be formed from elastomeric or rigid materials. Such materials can be shaped by microfabrication techniques such as photolithography, etching, injection molding and the like. The applicator head 15 may be an assemblage of parts such as a layered assembly. Each layer may formed from a different material such as elastomer, silicon, SU-8, photoresist, thermoplastics, ceramic, and metal.

There may be multiple first conduits 1 or apertures 18 coupled to a single second aperture 19 via a common flow path. Different reactive agents may be introduced to each of the conduits for reaction within the flow path. The flow path may thus act as a reaction fluid container. Similarly, there may be multiple second apertures 19 connected to a common first aperture 18 via common flow path. Equally, there may be multiple first conduits 1 or apertures 18 connected to multiple second apertures 19 or conduits 2 via a common flow path.

Multiple devices as herein before described may be integrated to form an array. Different configurations of such an array are possible, involving different numbers of devices. The fluid containers 9, 10 of such arrays may be interconnected to form a cascade. Some of the interconnected fluid containers 9, 10 may provide reaction fluid containers in which the first fluid reacts. The product of such reactions may be analyzed in other fluid containers or on the surface 11. Such products may be used to treat or react with the surface 11.

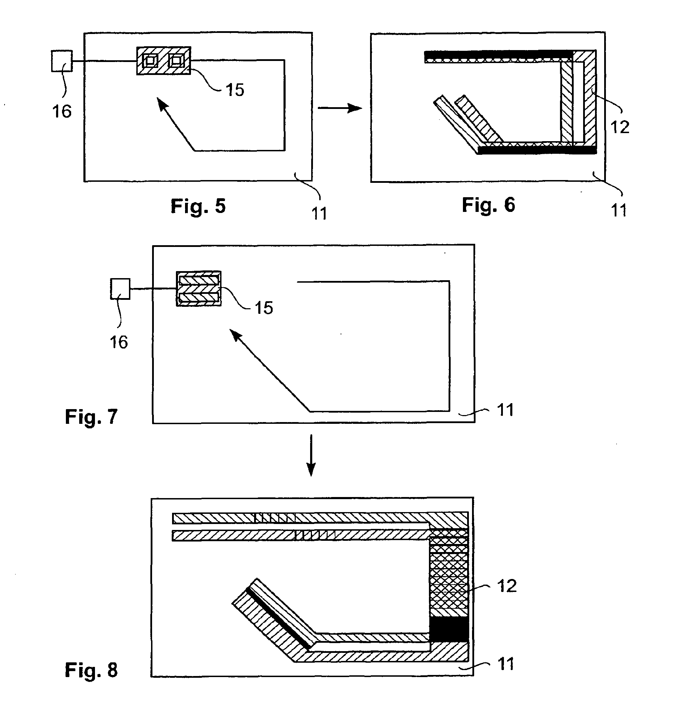

With reference to Figure 5, a device as herein before described may be employed to trace different fluids across the surface 11, each fluid being loaded into a different fluid container of the device. The applicator head 15 is therefor coupled to a drive 16, also referred to as manipulator. The manipulator 16 may be employed to position the applicator head 15 relative to the surface 11. With the drive 16, a series of patterns can be created one after the other, but also a concatenated pattern can be created when moving the applicator head 15 during the patterning process, i.e., while the first fluid 3 is flowing out of the first aperture 18. Hereby more complicated patterns can be created. The manipulator 16 may be manually controlled or automatically controlled via a programmable computer or similar electronic control system. The manipulator 16 may act on the applicator head 15, the surface 11, or both, providing control of in plane and/or out of plane translational and/or rotational relative motions.

Referring to Figure 6, depending the orientation and motion of the applicator head 15 relative to the surface 11, the different first fluids can be mixed in selected regions of the surface 11. Such mixing may, for example, facilitate localized reactions between the first fluids in selected regions of the surface 11. Equally the applicator head 15 as herein before described may be employed to trace similar first fluids across the surface 11 in separate trails. Depending on the orientation and motion of the applicator head 15 relative to the surface 11, the trails can be separate or superimposed on each other.

A plurality of applicator heads 15 as herein before described may be ganged together in an array. For example, such an array may comprise two apertures 18 extending from separate fluid containers 9. Each fluid container 9 may contain the same fluid material or different fluid materials. Other arrays may comprise more than two apertures. Groups of such apertures may share a common fluid container. Referring to Figure 7, two or more such applicator heads 15 may be mounted in an array as herein before described and such a applicator head 15 may be likewise employed trace a flow of the first fluid 3 across the surface 11. Independent control of flow rate and tracing speed permits tuning of the surface treatment applied via the applicator head 15. Such an array may also be employed to trace two fluid flows across the surface 11.

Figure 8 depicts the resulting pattern 12 on the surface, after use of the arrangement of fig. 7. The fluid flows may comprise the same or different fluid materials. Again, depending on the orientation and motion of the applicator head 15 relative to the surface 11, the trails of the fluid flows can be separate or superimposed on each other. Independent control of the tracing speed and flow rate permits creation of gradients in, for example, adsorbed molecules on the surface.

The flow path can e.g. be in the dimension of being around 100 micrometers long and 100 micrometers wide. Likewise, the apertures 18 may be around 100 micrometers wide. The recession 30 may be between around 1 and 10 micrometers deep. The volumes of the fluid containers 9, 10 may be around 500 nanoliters each. It will appreciated that different dimensions are possible.

With the proposed applicator head 15 and method it is possible to locally transport the first fluid 3 from a reservoir, i.e., the first fluid container 9, to the surface 11, and confine the first fluid 3 without requiring a physical seal and without requiring a surface free-energy confinement. This applicator head 15 is used with the surface 11 immersed in the environmental fluid that is a liquid. Thus, it is possible to use non-sealing materials such as Si to define the discharge aperture 18, and it is not necessary to optimize the wettability of the apertures 18, 19 and of the applicator head 15. The dispensed first fluid 3 is recuperatable, and can be reused. It prevents contaminating or damaging the treated surface 11 by a physical contact. The flow produced by the applicator head 15 can prevent depletion of material that can occur at these small scales otherwise. The localization of the surface treatment may go down to areas of a few micrometers and possibly even lower. This device permits the creation of arrays of discharge/aspiration apertures at high density. When the applicator head 15 is drawn over a surface, it can produce smooth lines, which are smoother than inkjet patterns, and which can probably be made even smaller than inkjet lines, precisely because the first fluid 3 does not spread upon contacting the surface and because there is not a large volume that dries. If a flow is applied in conjunction with sliding, the concentration of the deposited material can be continuously varied, such as to produce gradients. Such an applicator head 15 can be used for additive or subtractive (aspirator) patterning of the surface 11. If a series of applicator heads 15 are drawn one behind another, each discharge aperture 18 can contain a reagent that is used in a "chain-reaction". In another application, several dispensers, i.e. first apertures 18, can be combined with a single aspirator, i.e., second aperture 19, allowing to perform quickly complex processes on a region of a surface, for example they may contain the 4 DNA bases which could thus be delivered in sequence, or they may contain two components that can react together, which could for instance be used for gluing parts together.

Potential applications encompass patterning of organic materials, patterning of biomaterials, exposing locally a sub-population of fragile cells to a specific chemical treatment, exposing locally a sub-population of beads to a specific chemical treatment, drawing lines on surfaces in solution.

Fluid dispensed from the applicator head 15 is confined in a volume defined by fluid flow. A physical seal between the applicator head 15 and the surface, that is, the surface to be contacted by the fluid, is not needed.

Such applicator heads 15 are especially although not exclusively useful in the application of surface treatment in a range of fields, including microelectronics, optics, biology, biochemistry, and biotechnology. The present invention also extends to an array of such applicator heads 15.

There may be a feedback system for measuring pressure within such a network, for example at the apertures 18, 19 and/or fluid containers 9, 10. Alternatively, there may be provided feedback based on the volume of fluid pumped. The feedback may facilitate control of flow of the first fluid and avoid undesired spreading of first fluid on the surface. There may be a plurality of fluid containers each coupled to an aperture, where pressure is controlled in each fluid container, in parallel or individually. Further, there may be one or more valves that control the flow for each fluid container in parallel or individually.

The fluid container may apply a pressure for retaining the fluid when the aperture is remote from the surface. The fluid container may comprise a capillary network for applying pressure to the fluid. The capillary network may comprise at least one of a plurality of parallel capillary members, a mesh, a porous material, and a fibrous material. There may be a plurality of fluid containers each coupled to an aperture. The pressures may be such that the fluid is drawn towards the fluid containers in response to withdrawal of the aperture from the surface. There may be a plurality of first and second fluid containers each coupled to the aperture, where the pressure is controlled in each fluid container, in parallel or individually.

There is now provided a method for applying a fluid to a surface, the method comprising: locating a single aperture device as herein before described proximal to the surface; supplying the fluid to the surface via the applicator head 15; and, retracting the applicator head 15 from the surface.

Applicator heads 15 as used in the present invention may be employed to deposit biomolecules in selected regions of a surface to make bio-arrays, thus facilitating mass fabrication of bio-chips. Applicator heads 15 as used in the present invention can be equally employed in subjecting selected areas of a surface to other processes, such as processes for: repairing pattern defects on a surface; etching specific areas of a surface; depositing metal on a surface; localizing an electrochemical reactions on a surface; depositing catalytic particles for electroless deposition of metals, deposition glass or latex beads or other particles on a surface; passivating specific areas of a surface; patterning proteins, DNA, cells, or other biological entities on a surface; making assays; and, staining cells.

The described applicator head 15 comprises a dual conduit system. The apertures 18, 19 of the conduits 1, 2 are disposed at a distance d from another, that is larger than the diameter of the apertures 18, 19 themselves. The first fluid 3 that is delivered from the delivery aperture 18 travels along the distance d and is then drawn up into the second aperture 19. The device hence works as a dynamic fluid delivery system, in that the first fluid 3 is always in motion to confine its spreading into the environmental fluid 20. Due to the constant flow of the first fluid 3, the applicator head 15 can be moved over the surface 11 also during the application of the first fluid 3. The major part of the first fluid 3 that is expelled from the first aperture 18 onto the substrate surface 11 is drawn into the second aperture 19. In the ideal case, the portion of the first fluid that is drawn into the second aperture 19 is more than 90% of the expelled amount of the first fluid 3. The distance d between the apertures 18, 19 determines the size of the resulting pattern 12 on the surface 11. In an application where the applicator head 15 is not moved during the fluid application, the pattern 12 has hence a length that substantially corresponds to the distance d. More precisely, if the distance is measured between the centers of the apertures, the length of the pattern 12 in that direction corresponds to the distance d plus the distance between the centers and the distal aperture rim of each of the apertures 18, 19. In a case in which the applicator head 15 is moved and used in a pencil-like fashion, the distance d determines the width of the line if moved orthogonally to the line connecting the two apertures 18, 19.

The expulsion of the first fluid 3 from the first aperture 18 occurs synchronously to the sucking of the second fluid 4 into the second aperture 19, in order to achieve the desired precision of the resulting pattern 12. To ensure that the fluid flow of the second fluid 4 occurs at the same time as the fluid flow of the first fluid 3, the flow controllers 7, 8 can be coupled to respond to a single switch-on signal, or be mechanically coupled. The applicator head 15 is ideally operated to draw as much as possible if not all of the expelled first fluid 3 into the second aperture 19.

The device can also be operated to manipulate a particle such as a cell, a bead, a molecule, a nanodevice or the like. Therefor, the applicator head 15 is located near the particle that resides on the surface 11 in the environmental fluid 20. The first fluid 3 is then moved towards the surface 11, whereby the particle is removed from the surface 11 and drawn into the second conduit 2. The applicator head 15 can thereafter be removed from that position. The particle can in the same or a modified form thereafter be deposited at a different location, either by moving it into the first conduit 1 and from there to the different location, or by reversing the operation of the applicator head 15 and moving the second fluid towards the surface 11.

Any disclosed embodiment may be combined with one or several of the other embodiments shown and/or described. This is also possible for one or more features of the embodiments.

## Claims

1. A method for applying a liquid to a surface, the method comprising:
providing a surface (11) immersed in an environmental liquid (20) and a device, said device comprising:
an applicator head (15), comprising a block of solid material;
a first conduit (1) having a first aperture (18) at an end thereof, for directing a flow of a first liquid (3) towards the surface (11), in operation; and
a second conduit (2) having a second aperture (19) at an end thereof, for directing a flow of a second liquid (4) away from said surface (11),
wherein,
said conduits (1, 2) are arranged in said block of solid material;
said first aperture (18) is arranged at a distance (d) from the second aperture, wherein said distance is measured between the centers of the apertures (19) and is such that an elongated flow path can be created between those apertures, that has a length that corresponds to said distance (d) plus a distance between the center of and a distal aperture rim of the first aperture (1) and a distance between the center of and a distal aperture rim of the second aperture (2); and
said first conduit (1) is arranged relative to said second conduit (2) such that in operation said second liquid (4) comprises substantially said first liquid (3),
and wherein the device further comprises:
a first liquid container (9), connected to the first conduit (1), for deploying the first liquid (3) through the first conduit (1) to the surface (11), in operation;
a second liquid container (10), connected to the second conduit (2), through which the second liquid (4) is movable into the second liquid container (10) away from the surface (11), in operation;
a first flow controller (7) configured for controlling a first flow rate or a first pressure (p3) of said first liquid (3); and
a second flow controller (8) configured for controlling a second flow rate or a second pressure (p4) of said second liquid (4);
locating said device proximal to the surface (11), to bring the two apertures (18, 19) close to the surface and at a substantially identical distance from the surface;
applying the first liquid (3) to the surface via said first conduit (1), said first liquid (3) being a processing liquid, by using the first flow controller (7) and the second flow controller (8) to provide first and second pressures (p3, p4) or first and second flow rates such that the first liquid (3) travels along said elongated flow path and is drawn towards the second aperture (19), wherein the flow of the first liquid is hydrodynamically confined in said environmental liquid (20) between said first aperture, said second aperture and said surface, to create a pattern (12) on the surface; and
retracting the device from the surface (11).

## Patentansprüche

1. Verfahren zum Aufbringen einer Flüssigkeit auf eine Oberfläche, das Verfahren aufweisend:
Bereitstellen einer Oberfläche (11), die in eine umgebende Flüssigkeit (20) getaucht wird, und einer Einheit, die Einheit aufweisend:
einen Applikatorkopf (15), welcher einen Block aus festem Material aufweist;
eine erste Leitung (1), welche an einem Ende eine erste Öffnung (18) aufweist, zum Leiten eines Stroms einer ersten Flüssigkeit (3) in Richtung der Oberfläche (11) im Betrieb; und
eine zweite Leitung (2), welche an einem Ende eine zweite Öffnung (19) aufweist, zum Leiten eines Stroms einer zweiten Flüssigkeit (4) von der Oberfläche (11) weg,
wobei
die Leitungen (1, 2) in dem Block aus festem Material angeordnet sind;
die erste Öffnung (18) in einem Abstand (d) von der zweiten Öffnung angeordnet ist, wobei der Abstand zwischen den Mitten der Öffnungen (18, 19) gemessen wird und so ausgestaltet ist, dass ein langgestreckter Fließweg zwischen jenen Öffnungen erzeugt werden kann, welcher eine Länge aufweist, die dem Abstand (d) plus einem Abstand zwischen der Mitte und einem entfernten Öffnungsrand der ersten Öffnung (18) und einem Abstand zwischen der Mitte und einem entfernten Öffnungsrand der zweiten Öffnung (19) entspricht; und
die erste Leitung (1) derart in Bezug auf die zweite Leitung (2) angeordnet ist, dass die zweite Flüssigkeit (4) im Betrieb im Wesentlichen die erste Flüssigkeit (3) umfasst,
und wobei die Einheit ferner aufweist:
einen ersten Flüssigkeitsbehälter (9), welcher mit der ersten Leitung (1) verbunden ist, zum Anwenden der ersten Flüssigkeit (3) durch die erste Leitung (1) auf die Oberfläche (11) im Betrieb;
einen zweiten Flüssigkeitsbehälter (10), welcher mit der zweiten Leitung (2) verbunden ist, durch welche die zweite Flüssigkeit (4) im Betrieb weg von der Oberfläche (11) in den zweiten Flüssigkeitsbehälter (10) überführbar ist;
eine erste Flusssteuerung (7), welche dafür konfiguriert ist, eine erste Fließgeschwindigkeit oder einen ersten Druck (p3) der ersten Flüssigkeit (3) zu steuern; und
eine zweite Flusssteuerung (8), welche dafür konfiguriert ist, eine zweite Fließgeschwindigkeit oder einen zweiten Druck (p4) der zweiten Flüssigkeit (4) zu steuern;
Anordnen der Einheit in der Nähe der Oberfläche (11), um die zwei Öffnungen (18, 19) nah an die Oberfläche und in einen im Wesentlichen identischen Abstand von der Oberfläche zu bringen;
Anwenden der ersten Flüssigkeit (3) auf die Oberfläche über die erste Leitung (1), wobei die erste Flüssigkeit (3) eine Prozessflüssigkeit ist, unter Verwendung der ersten Flusssteuerung (7) und der zweiten Flusssteuerung (8), um für einen ersten und zweiten Druck (p3, p4) oder eine erste und zweite Fließgeschwindigkeit zu sorgen, so dass die erste Flüssigkeit (3) entlang dem langgestreckten Fließweg fließt und in Richtung der zweiten Öffnung (19) gezogen wird, wobei das Fließen der ersten Flüssigkeit in der umgebenden Flüssigkeit (20) hydrodynamisch zwischen der ersten Öffnung, der zweiten Öffnung und der Oberfläche begrenzt wird, um eine Struktur (12) auf der Oberfläche zu erzeugen; und
Zurückziehen der Einheit von der Oberfläche (11).

## Revendications

1. Procédé d'application d'un liquide sur une surface, le procédé comprenant :
la fourniture d'une surface (11) immergée dans un liquide environnemental(20) et une unité, ladite unité comprenant:
une tête d'applicateur (15), comprenant un bloc en matériau solide ;
un premier conduit (1) avec une première ouverture (18) à l'une de ses extrémités, pour diriger le flux d'un premier liquide (3) vers la surface (11), pendant le fonctionnement ; et
un second conduit (2) avec une seconde ouverture (19) à l'une de ses extrémités, pour diriger le flux d'un second liquide (4) loin de ladite surface (11),
dans lequel,
lesdits conduits (1,2) sont disposés dans ledit bloc en matériau solide ;
ladite première ouverture (18) est disposée à une distance (d) de la seconde ouverture, dans laquelle ladite distance est mesurée entre les centres des ouvertures (18, 19) et est telle qu'un trajet d'écoulement allongé peut être créé entre ces ouvertures, qui a une longueur correspondant à ladite distance (d) plus une distance entre le centre de et le bord distal de l'ouverture de la première ouverture (18) et une distance entre le centre de et le bord distal de l'ouverture de la seconde ouverture (19) ; et
ledit premier conduit (1) est disposé par rapport audit second conduit (2) de telle sorte qu'en fonctionnement ledit second liquide (4) comprend sensiblement ledit premier liquide (3),
et dans lequel l'unité comprend en outre :
un premier container de liquide (9), relié au premier conduit (1), pour faire couler le premier liquide (3) à travers le premier conduit (1) sur la surface (11), en fonctionnement ;
un second container de liquide (10), relié au second conduit (2), à travers lequel le second liquide (4) est dirigé vers le second container de liquide (10) loin de la surface (11), en fonctionnement ;
un premier contrôleur de débit (7) configuré pour contrôler le premier débit ou la première pression (p3) dudit premier liquide (3) ; et
un second contrôleur de débit (8) configuré pour contrôler le second débit ou la seconde pression (p4) dudit second liquide (4) ;
le positionnement proximal de ladite unité à la surface (11), pour amener les deux ouvertures (18, 19) près de la surface et à une distance sensiblement identique de la surface ;
l'application du premier liquide (3) à la surface via ledit premier conduit (1), ledit premier liquide (3) étant un liquide de traitement, par la mise en oeuvre du premier contrôleur de débit (7) et du second contrôleur de débit (8) pour fournir la première et la seconde pression (p3 ; p4) ou le premier et le second débit de telle sorte que le premier liquide (3) s'écoule le long dudit trajet d'écoulement allongé et est envoyé vers la seconde ouverture (19), où le débit du premier liquide est thermodynamiquement confiné dans ledit liquide environnemental (20) entre ladite première ouverture, ladite seconde ouverture et ladite surface, pour créer un motif (12) sur la surface ; et
le retrait de l'unité de la surface (11).
